# EUROPÄISCHE PATENTANMELDUNG

(11) **EP 1 842 414 A1**
(43) Veröffentlichungstag der Anmeldung: **10.10.2007**
(21) Anmeldenummer: 07006492.8
(22) Anmeldetag: 29.03.2007
(51) Int. Cl.: A01C 7/04

(54) **Einzelkornsämaschine**

(30) Priorität: 06.07.2006 DE 102006031281; 05.04.2006 DE 102006015951
(71) Anmelder: Amazonen-Werke H. Dreyer GmbH & Co. KG, 49205 Hasbergen (DE)
(72) Erfinder: Johannaber, Stefan Jan, 49536 Lienen (DE); Götzen, Nils, 49078 Osnabrück (DE); Wiebusch, Thorsten, 49205 Hasbergen (DE)

(57) **Zusammenfassung**

Pneumatische Einzelkornsämaschine mit einem Saatgutvorratsbehälter (1) und zumindest einer drehbar angeordneten Vereinzelungstrommel (3), in deren Umfangsfläche kreisförmig angeordnete Perforationsreihen angebracht sind, einem Gebläse, mittels welchem eine Druckdifferenz zwischen dem Innenraum der Vereinzelungstrommel (3) und dem Außenbereich der Vereinzelungstrommel (3) erzeugbar ist, so dass, wenn die Vereinzelungstrommel (3) durch den Saatgutvorrat geführt wird, sich an den Perforationen der perforierten Trommel Samenkörner anlagern, wobei der Saatgutvorratsbehälter (1) zwei von einander beabstandete Seitenwände aufweist, die sich parallel zur Bewegungsrichtung der Trommel erstrecken und mit der Trommel zumindest annähernd abdichtend zusammenwirken, wobei von den Perforationslöchern der Trommel zur Ablageeinrichtung führende Ausbringleitungen (17,18) vorgesehen sind, um ein verbessertes Vereinzeln und somit eine gleichmäßige Saatablage der Saatkörner auch bei höheren Fahrgeschwindigkeiten vorzuschlagen, ist vorgesehen, dass der Eingangsbereich der Ausbringleitungen (17,18) trichterförmig und/oder Y-förmig ausgebildet ist, dass die trichterförmigen und/oder Y-förmigen Eingangsbereiche zwei benachbarten Perforationsreihen zugeordnet sind und zwar derart, dass sie jeweils die sich von den Perforationen zweier benachbarter Perforationsreihen lösenden vereinzelten Samenkörner auffangen und in die jeweilige und/oder gemeinsame Ausbringleitung übergeben.

## Beschreibung

Die Erfindung betrifft eine pneumatische Einzelkornsämaschine gemäß des Oberbegriffes des Patentanspruches 1.

Eine derartige Einzelkornsämaschine ist in der DE 693 12 431 T2 beschrieben. Bei dieser Einzelkornsämaschine ist jeweils einer Perforationsreihe eine von der Vereinzelungstrommel zu der Ablageeinrichtung der Einzelkornsämaschine führende Ausbringleitung zugeordnet. Beim Ausbringen mit höheren Fahrgeschwindigkeiten muss die Trommel mit relativ hohen Umlaufgeschwindigkeiten angetrieben werden, um die gewünschte Ausbringmenge bzw. Anzahl von Körner pro qm vereinzeln zu können. Hierbei kann die Umlaufgeschwindigkeit der Trommel in Bereiche gelangen, in denen eine ausreichend gleichmäßige Vereinzelung der Saatkörner nicht immer gewährleistet ist, weil die Zeit zum Anlagern des Saatkornes an einer Perforation zu kurz, der auftretende Impuls beim Berühren der Abstreifer zum abstreifen zusätzlich an den Perforation anhaftender Saatkörner zu groß wird. Durch den Abstreifer bzw. durch den vom Abstreifer erzeugten Impuls werden dann sämtliche Saatkörner und nicht nur die zusätzlich anhaftenden Samenkörner von der Perforation abgestreift.

Der Erfindung liegt die Aufgabe zugrunde, ein verbessertes Vereinzeln und somit eine gleichmäßige Saatablage der Saatkörner auch bei höheren Fahrgeschwindigkeiten vorzuschlagen.

Diese Aufgabe wird erfindungemäß durch die kennzeichnenden Merkmale des Patentanspruches 1 gelöst. Infolge dieser Maßnahmen kann bei gleicher Ausbringmenge die Drehzahl bzw. Umfanggeschwindigkeit der Trommel reduziert werden. Hierdurch wird ein besseres Aufnahmeverhalten und anlagern der Saatkörner an den mit einem Druckunterschied beaufschlagten Perforationen der Perforationsreihen erreicht. Des Weiteren wird ein besseres Vereinzeln der Saatkörner und das Abstreifen der überflüssigen Saatkörner durch die Abstreifer erreicht. Dies ist insbesondere auf die Reduzierung des Impulses bzw. Stoßes, denen die an den Perforationen anhaftenden bzw. überflüssigen anhaftenden Saatkörner durch den Abstreifer erfahren, zurück zuführen. In einfacher Weise werden die Saatkörner von zwei Perforationsreihen durch die Trichter oder Y-förmig ausgebildeten Eingangsbereiche der Ausbringleitung in einer Ausbringleitung zusammengeführt.

Um zu erreichen, dass die Vereinzelungstrommel bei einer verringerten Drehzahl die gewünschte Menge Saatkörner in gleichmäßiger Weise in Ausbringleitung zuführen kann, ist vorgesehen, dass die Perforation der benachbarten Perforationsreihen, die einer Ausbringleitung zugeordnet sind, versetzt zueinander angeordnet sind.

Um die Saatkörner sicher nach dem Ablösen von den Perforationen der einander benachbarten Seitenflächen der Vereinzelungsgürtel durch die Eingangsbereiche der Leitungen vorteilhaft auffangen zu können, ist vorgesehen, dass die trichterförmigen Eingangsbereiche als Eingangstrichter ausgebildet sind. Eine vorteilhafte Ausgestaltung des Eingangsbereiches der Ausbringleitungen lässt sich dadurch erreichen, dass in dem Eingangsbereich der Eingangstrichter ein die Eingangstrichter in ein Y-förmiges oder hosenartiges Leitungselement aufteilendes Wandstück angeordnet ist, dass dieses Leitungsstück sich zu einer gemeinsamen Leitung vereinigt und/oder in eine gemeinsame Leitung einmündet. Infolge dieser Maßnahmen werden die beiden Eingangsbereiche der jeweils einer Perforationsreihe zugeordneten Eingangsbereiche des Eingangstrichters vorteilhaft mit einem kleinen Eingangsquerschnitt ausgestaltet, wobei eine hohe Strömungsgeschwindigkeit auch bereits im Eingangsbereich, ohne dass es zu einem zu hohen Staudruck kommt, erreicht wird.

Die Eingangsbereiche der Ausbringleitungen in die Ablöse- und Abflugrichtung der sich von den Perforationen lösenden vereinzelten Körner können so ausgerichtet sein, dass die Saatkörner ungehindert in die Eingangsöffnung, ohne zumindest wesentlich an die Wandungen der Eingangsbereiche der Ausbringleitungen anzustoßen, von dem in den Ausbringleitungen herrschenden Luftstrom mitgerissen und zu den Ablageeinrichtungen der Einzelkornsämaschinen gefördert werden. Durch diese erfindungsgemäße Ausgestaltung der Eingangsbereiche der Ausbringleitungen ergibt sich im Eingangsbereich eine hohe Strömungsgeschwindigkeit, so dass die Saatkörner sicher vom Luftstrom in der Leitung mitgerissen werden.

Eine vorteilhafte Ausrichtung der Wände des Eingangstrichters lässt sich dadurch erreichen, dass die Ausrichtung der Wände der Eingangstrichter an die Abflugrichtung der Samenkörner von den Perforationen in Richtung der Ausbringleitungen angepasst ist.

Eine vorteilhafte Montage des Eingangsbereiches der Ausbringleitung an die eigentliche Ausbringleitung wird dadurch erreicht, dass an dem eingangstrichter-, hosen-und/oder Y-artigen Leitungsstück die Ausbringleitung angeschlossen ist.

Um günstige Strömungsverhältnisse zur Einleitung der sich von den Perforation der Vereinzelungstrommel lösenden und in den Einmündungsbereichen der Ausbringleitung hinein strömenden Saatkörner zu erreichen, ist vorgesehen, dass die der Drehrichtung der Vereinzelungstrommel zugewandte Stirnseite der Eingangselemente, in deren die Eingangsbereiche der Ausbringleitungen angeordnet sind, zumindest im Einmündungsbereich trichterartig aufeinander zulaufende Stirnflächen aufweisen.

Dies wird noch dadurch unterstützt, wenn die Stirnflächen einen kreisförmigen Abschnitt aufweisen.

Hierbei kann vorgesehen sein, dass die Querschnittsausdehnung der Einzugs- und/oder Eingangsbereiche der Ausbringleitungen im stirnseitigen Bereich in dem der Vereinzelungstrommel benachbarten Bereich im Vergleich zu einem kreisförmigen Querschnitt aufgeweitet ausgebildet ist.

Eine besonders gute Übergabe der Saatkörner von der Trommel in den Eingangsbereich oder Einordnungsbereich der Ausbringleitung wird dadurch erreicht, dass der Eingangsbereich und/oder Einordnungsbereich im Bereich der Perforationsreihe unmittelbar an der Trommeloberfläche angeordnet ist.

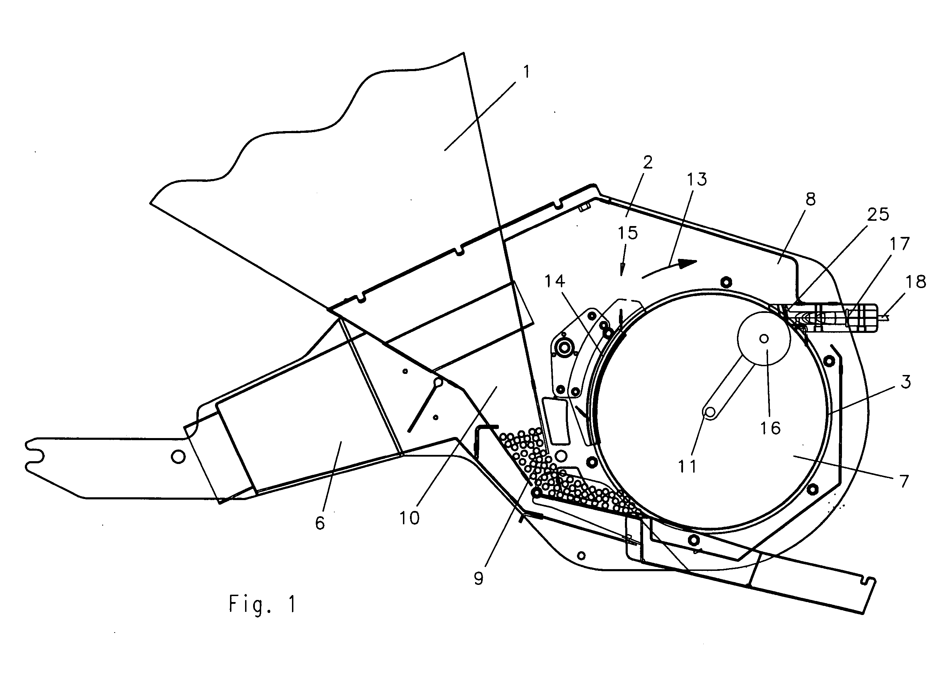

Weitere Einzelheiten der Erfindung sind der Beispielsbeschreibung und den Zeichnungen zu entnehmen. Hierbei zeigen
- Fig. 1: die Vereinzelungsvorrichtung der Einzelkornsämaschine in vereinfachter ausschnittsweiser Darstellung in Seitenansicht,
- Fig. 2: die Vereinzelungsvorrichtung in der Draufsicht,
- Fig. 3: die Zuordnung der Ausbringleitung zu der Vereinzelungstrommel in Draufsicht, ausschnittsweise und vergrößerter Darstellung,
- Fig. 4: die Vereinzelungsvorrichtung in der Draufsicht mit anders angeordneten Ausbringleitungen und
- Fig. 5: die Anordnung des Eingangsbereichs der Ausbringleitung gemäß Fig. 4.

Die Sämaschine weist den Vorratsbehälter 1 und die unterhalb des Vorratsbehälters 1 in einem Gehäuse 2 drehbar angeordnete und rotierend angetriebene Vereinzelungstrommel 3 auf. In der Umfangsfläche der Vereinzelungstrommel 3 sind in kreisförmig umlaufenden Perforationsreihen 4 die Perforationen 5 angeordnet. Der Vorratsbehälter 1 und das Gehäuse 2 oberhalb der Trommel 3 sind zumindest annähernd druckdicht mittels eines nicht dargestellten Deckels verschlossen. Über den Luftanschlusskasten 6 ist der Vorratsbehälter 1 und das Gehäuse 2 oberhalb der Trommel 3 durch das an den Anschlusskasten 6 angeschlossene und nicht dargestellte Druckluftgebläse mit Druckluft beaufschlagbar, so dass die Perforationsreihen 4 mit einer Druckdifferenz zwischen dem Innenraum 7 der Vereinzelungstrommel 3 und dem Außenbereich 8 der Vereinzelungstrommel 3 beaufschlagt werden. Aufgrund dieser Druckdifferenz lagern sich an den Perforationen 5 der Perforationsreihen 4 der Vereinzelungstrommel 3, wenn diese durch den Saatgutvorrat 9, der sich aufgrund der Führung des Saatgutschachtes 10 bis unterhalb der Drehachse 11 der Trommel 3 erstreckt, Samenkörner an. Der Saatgutvorratsbehälter 1 bzw. das Gehäuse 2 unterhalb des Saatgutvorratsbehälters 1, in dem die Vereinzelungstrommel 3 drehend und abdichtend gelagert ist, weist die voneinander beabstandeten Seitenwände 12 auf, die sich parallel zur Bewegungsrichtung 13 der Trommel 3 erstrecken und mit der Trommel 3 zumindest annähernd abdichtend zusammenwirken.

In Drehrichtung 13 gesehen ist oberhalb des Saatgutvorrates die die Abstreiferelemente 14, aufweisende Abstreifervorrichtung 15 angeordnet. Jeder Perforationsreihe 6 ist ein Abstreiferelement 14 zugeordnet. Im oberen Bereich der Vereinzelungstrommel 3 ist auf der Innenseite 8 ein die Druckdifferenz, die an den Perforationen 5 der Perforationsreihen 4 anliegt, unterbrechendes Element 16 angeordnet. Hieran anschließend sind auf der Außenseite 8 der Trommel 3 den Perforationsreihen 4 zugeordnete Ausbringleitungen 17 der Saatgutleitungen 18 zugeordnet, über welche die sich von den Perforationen 5 lösenden vereinzelten Saatkörner auffangen und durch den in den Leitungen 17 herrschenden Luftstrom zu den als Säscharen ausgebildeten und nicht dargestellten Ausbringelementen geführt werden.

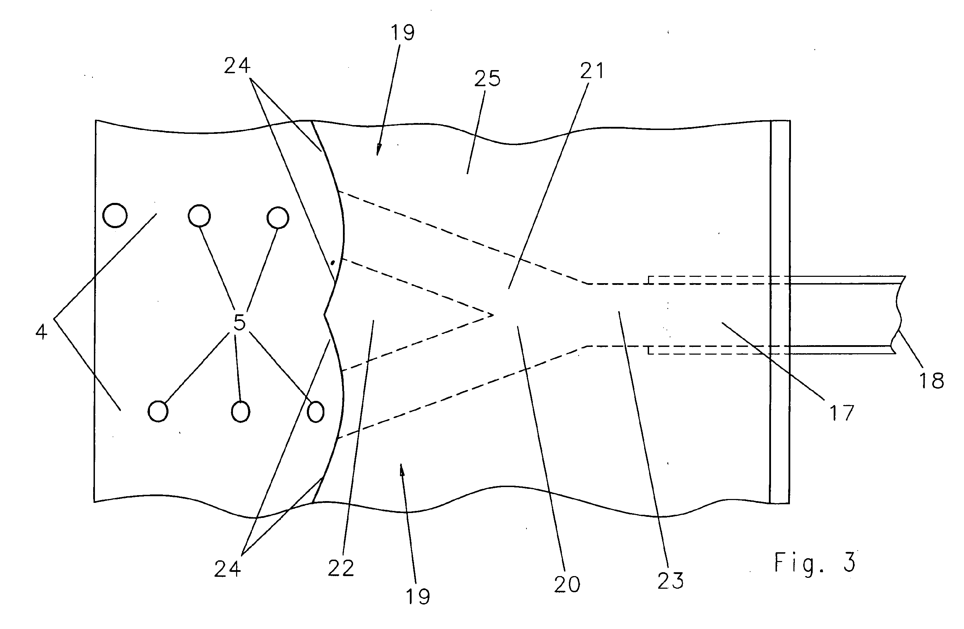

Die Eingangsbereiche 19 der Ausbringleitungen 17 sind trichterförmig und Y-förmig ausgebildet. Die trichterförmigen Eingangsbereiche 19 sind jeweils zwei benachbarten Perforationsreihen 4 zugeordnet und zwar derart, dass sie jeweils die sich von den Perforationen 5 zweier benachbarter Perforationsreihen 4 lösenden vereinzelten Samenkörner auffangen und in eine gemeinsame Ausbringleitung 18 übergeben. In dem Eingangsbereich 19 der Eingangstrichter 20 ist ein die Eingangstrichter in ein Y- oder hosenartiges Leitungselement 21 aufteilendes Wandstück 22 angeordnet, wie insbesondere Fig.,3 zeigt. Dieses Leitungsstück 21 vereinigt sich zu einer gemeinsamen Leitung 23 und mündet in eine gemeinsame Leitung 18. Die Eingangstrichter 20 der Ausbringleitung 17 reichen zumindest über die Perforationen 5 der Perforationsreihen 4 hinaus, wie insbesondere Fig. 3 zeigt. Die Ausrichtung der Wände der Eingangstrichter 20 ist an die Flugrichtung der Samenkörner aufgrund der Luftströmung von der Perforation 5 in Richtung der Ausbringleitung 17 angepasst. Wie bereits erwähnt ist an den Eingangstrichter 20, hosen- und Y-artigen Leitungsstück 21 die Saatgutleitung 18 angeschlossen.

Die der Drehrichtung 13 der Vereinzelungstrommel 3 zugewandte Stirnseite 24 der Eingangselemente 25, in denen die Eingangsbereiche 19 der Ausbringleitungen 17 angeordnet sind, weisen in ihrem Einmündungsbereich die trichterartig aufeinander zulaufenden Stirnflächen 24 auf. Die Stirnflächen 24 weisen kreisförmige Abschnitte auf, wie die Fig. 3 zeigt. Die Querschnittsausdehnung der Einzugs- oder Eingangsbereiche 19 der Ausbringleitungen 17 kann im stirnseitigen Bereich in dem der Vereinzelungstrommel 3 benachbarten Bereich im Vergleich zu einem kreisförmigen Querschnitt der Ausbringleitung 17 aufgeweitet ausgebildet sein. Der jeweilige Eingangsbereich 19 oder Einordnungsbereich, in dem die an die Perforationen 5 anhaftenden Samenkörner zu den Saatleitungen 17 gelangen, ist im Eingangsbereich 19 im Bereich der Perforationsreihen unmittelbar bis an die Trommeloberfläche heranreichend angeordnet, damit die anhaftenden Saatkörner optimal aufgefangen und in die Ausbringleitungen 17 und zu den Saatleitungen 18 eingeleitet werden können.

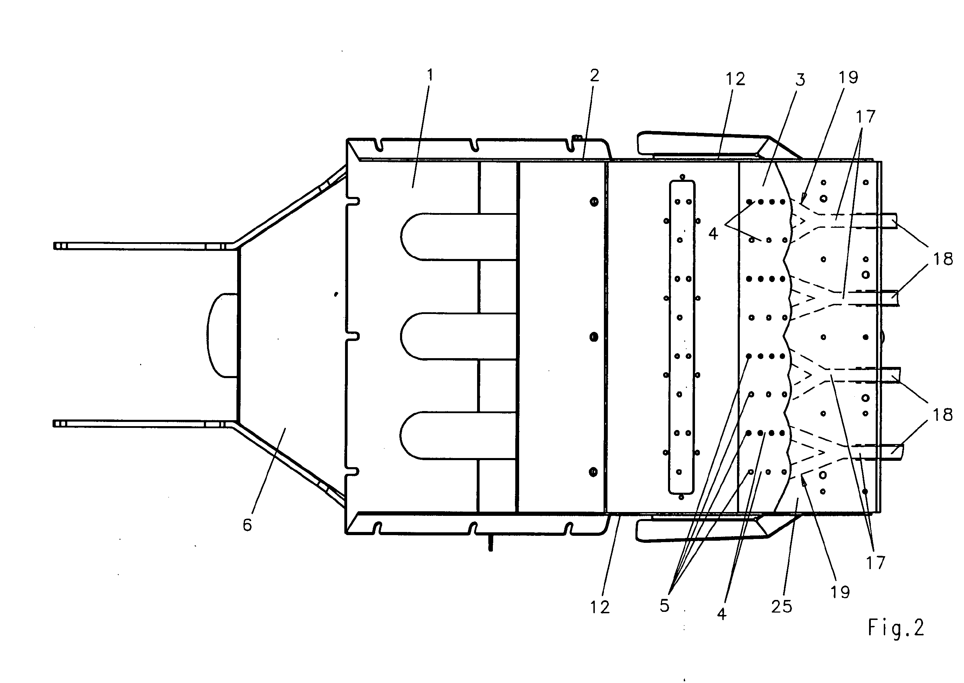

Die in den einander benachbarten Perforationsreihen 4 angeordneten Perforationslöcher 5 sind versetzt zueinander angeordnet, wie der Fig. 2 und 3 zu entnehmen ist. Hierdurch wird eine gleichmäßige Abgabe und Förderung der Saatkörner in den Saatleitungen 17 und 18 erreicht.

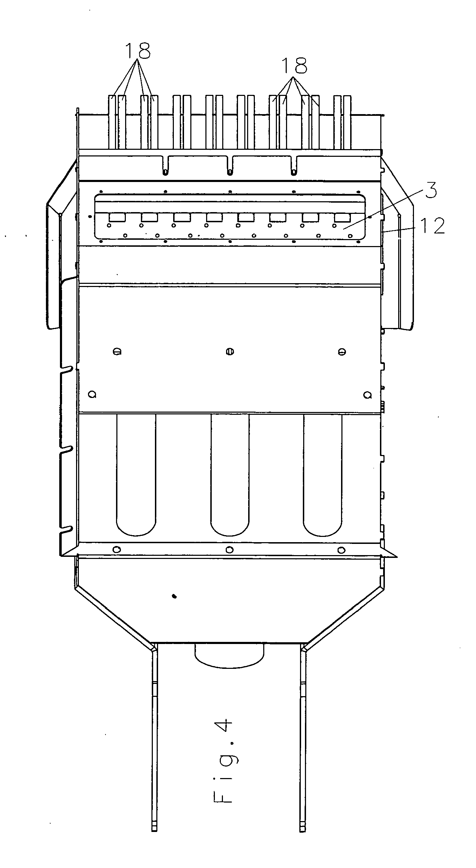

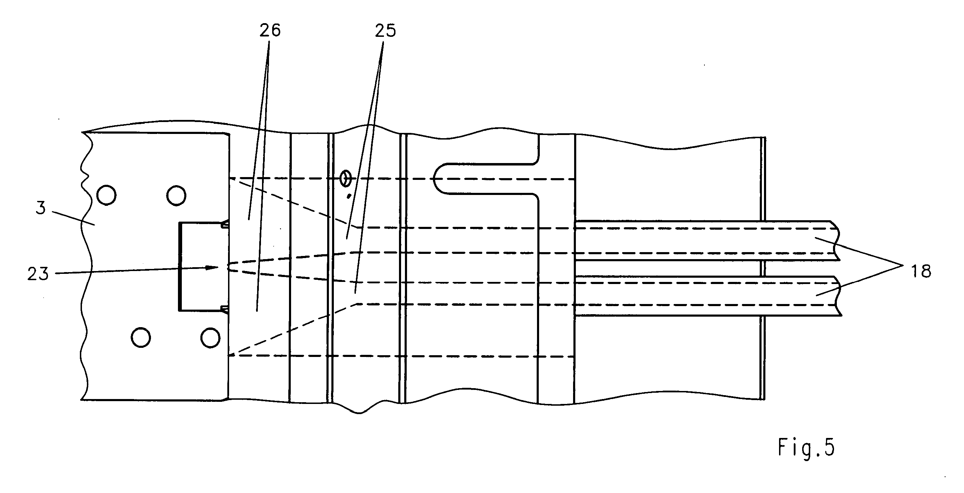

Die Ausgestaltung des Eingangsbereiches 23 gemäß dem Ausführungsbeispiel nach den Fig. 4 und 5 unterscheidet sich von den vorhergehenden Ausführungsbeispiel dadurch, dass jeder Eingangsbereich 23 des Eingangstrichters 26 jeweils einer Ausbringleitung 25 und einer Saatgutleitung 18 zugeordnet ist.

## Patentansprüche

1. Pneumatische Einzelkornsämaschine mit einem Saatgutvorratsbehälter und zumindest einer drehbar angeordneten Vereinzelungstrommel, in deren Umfangsfläche kreisförmig angeordnete Perforationsreihen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen der perforierten Trommel Samenkörner anlagern, wobei der Saatgutvorratsbehälter zwei von einander beabstandete Seitenwände aufweist, die sich parallel zur Bewegungsrichtung der Trommel erstrecken und mit der Trommel zumindest annähernd abdichtend zusammenwirken, wobei von den Perforationslöchern der Trommel zur Ablageeinrichtung führende Ausbringleitungen vorgesehen sind, **dadurch gekennzeichnet, dass** der Eingangsbereich (19,21) der Ausbringleitungen (17,18) trichterförmig und/oder Y-förmig ausgebildet ist, dass die trichterförmigen und/oder Y-förmigen Eingangsbereiche (19,21) zwei benachbarten Perforationsreihen (6) zugeordnet sind und zwar derart, dass sie jeweils die sich von den Perforationen (5) zweier benachbarter Perforationsreihen (6) lösenden vereinzelten Samenkörner auffangen und in die jeweilige und/oder gemeinsame Ausbringleitung (17,18) übergeben.

2. Einzelkornsämaschine nach Anspruch 1, **dadurch gekennzeichnet, dass** die Perforationen (5) der benachbarten Perforationsreihen (6), die einer Ausbringleitung (17,18) zugeordnet sind, versetzt zueinander angeordnet sind.

3. Einzelkornsämaschine nach Anspruch 1, **dadurch gekennzeichnet, dass** die trichterförmigen Eingangsbereiche (19,21) als Eingangstrichter (21) ausgebildet sind.

4. Einzelkornsämaschine nach Anspruch 3, **dadurch gekennzeichnet, dass** jedem Eingangstrichter (21) eine Ausbringleitung (17,18) zugeordnet ist.

5. Einzelkornsämaschine nach Anspruch 3, **dadurch gekennzeichnet, dass** in dem Eingangsbereich (19,21) der Eingangstrichter (21) ein die Eingangstrichter (21) in ein Y-förmiges oder hosenartiges Leitungselement (21) aufteilendes Wandstück (22) angeordnet ist, dass dieses Leitungsstück (21) sich zu einer gemeinsamen Leitung (17,18) vereinigt und/oder in eine gemeinsame Leitung (17,18) einmündet.

6. Einzelkornsämaschine nach einem oder mehreren der vorstehenden Ansprüche, **dadurch gekennzeichnet, dass** die Ausrichtung der Wände der Eingangstrichter (21) an die Abflugrichtung der Samenkörner von den Perforationen (5) in Richtung der Ausbringleitungen (17,18) angepasst ist.

7. Einzelkornsämaschine nach einem oder mehreren der vorstehenden Ansprüche, **dadurch gekennzeichnet, dass** an dem eingangstrichter-, hosen- und/oder Y-artigen Leitungsstück (19,21) die Ausbringleitung (17,18) angeschlossen ist.

8. Einzelkornsämaschine nach einem oder mehreren der vor stehenden Ansprüche, **dadurch gekennzeichnet, dass** die in einander benachbarten Perforationsreihen (6) angeordneten Perforationslöcher (5) versetzt zueinander angeordnet sind.

9. Einzelkornsämaschine nach einem oder mehreren der vorstehenden Ansprüche, **dadurch gekennzeichnet, dass** die der Drehrichtung (13) der Vereinzelungstrommel (3) zugewandte Stirnseite (24) der Eingangselemente (25), in denen die Eingangsbereiche (19,21) der Ausbringleitungen (17,18) angeordnet sind, zumindest im Einmündungsbereich trichterartig aufeinander zulaufende Stirnflächen (24) aufweisen.

10. Einzelkornsämaschine nach Anspruch 9, **dadurch gekennzeichnet, dass** die Stirnflächen (24) einen kreisförmigen Abschnitt aufweisen.

11. Einzelkornsämaschine nach einem oder mehreren der vorstehenden Ansprüche, **dadurch gekennzeichnet, dass** die Querschnittsausdehnung der Einzugs- und/oder Eingangsbereiche (19) der Ausbringleitungen (17,18) im stirnseitigen Bereich in dem der Vereinzelungstrommel benachbarten Bereich im Vergleich zu einem kreisförmigen Querschnitt aufgeweitet ausgebildet ist.

12. Einzelkorndrillmaschine nach einem oder mehreren der vorstehenden Ansprüche, **dadurch gekennzeichnet, dass** der Eingangsbereich (19) und/oder Einordnungsbereich im Bereich der Perforationsreihe (6) unmittelbar an der Trommeloberfläche angeordnet ist.
